# EUROPÄISCHE PATENTSCHRIFT

(11) **EP 2 121 237 B1**
(45) Veröffentlichungstag und Bekanntmachung des Hinweises auf die Patenterteilung: **24.08.2011**
(21) Anmeldenummer: 08706808.6
(22) Anmeldetag: 25.01.2008
(51) Int. Cl.: B23Q 1/01, B23Q 39/02

(54) **WERKZEUGMASCHINE**
MACHINE TOOL
MACHINE-OUTIL

(30) Priorität: 25.01.2007 DE 102007004643; 06.09.2007 DE 102007042288
(43) Veröffentlichungstag der Anmeldung: 25.11.2009
(73) Patentinhaber: Mauser-werke Oberndorf Maschinenbau GmbH, 78727 Oberndorf a. N. (DE)
(72) Erfinder: SCHWARZWÄLDER, Georg, 78661 Dietingen-Böhringen (DE); BUCZOLITS, Peter, 2000 Stockerau (AT); STUCHETZ, Markus, 1100 Wien (AT)
(74) Vertreter: Winter, Brandl, Fürniss, Hübner, Röss, Kaiser, Polte - Partnerschaft
(86) Internationale Anmeldenummer: PCT/DE2008/000141
(87) Internationale Veröffentlichungsnummer: WO 2008/089751

(56) Entgegenhaltungen:
- EP-A- 0 835 720
- EP-A- 1 642 673
- DE-A1-102004 050 035

## Beschreibung

Die Erfindung betrifft eine Werkzeugmaschine gemäß dem Oberbegriff des Patentanspruches 1.

Derartige Werkzeugmaschinen sind beispielsweise aus der DE 10 2004 050 035 A1 und der EP 1 642 673 A1 bekannt. Bei diesen inversen Maschinenkonzepten sind eine Vielzahl von Spindelköpfen an einem rahmenförmigen Ständer gelagert, wobei eine in Z-Richtung verstellbare Pinole auf einem X-Y-Schlittensystem verfahrbar gelagert ist, um das Werkstück zur Bearbeitung mit Bezug zu einem der Spindelköpfe auszurichten. Bei den bekannten Lösungen kann das Werkstück um die Z-Achse der Pinole gedreht werden, die Spindelköpfe sind seitlich oder oberhalb der Z-Achse angeordnet und mit Bezug zur X-Achse bzw. zur Y-Achse ausgerichtet.

Nachteilig bei dieser Lösung ist, dass eine Bearbeitung des Werkstückes in Z-Richtung nicht möglich ist, so dass entweder ein Umspannen des Werkstückes erforderlich ist oder die Bearbeitung mit einer weiteren Werkzeugmaschine durchgeführt werden muss.

Des Weiteren zeigte es sich, dass der etwa rechteckförmige Rahmen insbesondere bei einer Bearbeitung in Z-Richtung und hohen Zerspanungsleistungen nicht steif genug ist.

Demgegenüber liegt der Erfindung die Aufgabe zugrunde, eine nach dem Invers-Konzept ausgeführte Werkzeugmaschine zu schaffen, bei der eine Bearbeitung in X-, Y- und Z-Richtung mit hoher Zerspanungsleistung möglich ist.

Diese Aufgabe wird durch eine Werkzeugmaschine mit den Merkmalen des Patentanspruches 1 gelöst.

Erfindungsgemäß hat die Werkzeugmaschine eine Vielzahl von an einem Maschinengestell gelagerten Werkzeugspindelköpfen und einen Werkstückträger, der mit Bezug zu den Werkzeugspindelköpfen verfahrbar ist. Das die Werkzeugspindelköpfe tragende Maschinengestell ist als ein im Hinblick auf den Kraftfluss geschlossener Rahmen ausgeführt, durch den zumindest zwei etwa senkrecht oder parallel zueinander verlaufende Werkzeug aufnahme- oder Funktionsfächer ausgebildet sind, wobei der Rahmen als Raumgitter ausgebildet ist.

Mit anderen Worten gesagt, der Rahmen ist nicht im Wesentlichen zweidimensional wie beim eingangs beschriebenen Stand der Technik, sondern als dreidimensionale Rahmen- oder Fachwerkstruktur ausgeführt, wobei Aufnahmefächer für die Werkzeugspindelköpfe oder Funktionsfächer geschaffen werden, von denen gemäß einer Weiterbildung zumindest eines dem Werkstückträger gegenüber liegen kann, so dass die darin aufgenommenen Werkzeugspindelköpfe in Z-Richtung ausgerichtet sind. Die Fächer können jeweils beispielsweise einen oder mehrere Mehrspindelköpfe aufnehmen oder den Zugriff zum Arbeitsraum ermöglichen, um beispielsweise Werkstücke zu- oder abzuführen oder Messsysteme aufzunehmen.

Eine derartige Konstruktion zeichnet sich durch eine hohe Steifigkeit in X-, Y- und Z-Richtung aus, wobei eine Werkstückbearbeitung in allen drei Achsrichtungen bei hohen Zerspanungsleistungen ermöglicht wird.

Bei einem bevorzugten Ausführungsbeispiel ist jeweils ein Werkzeugaufnahmefach seitlich, gegenüber liegend und oberhalb der Z-Achse ausgeführt, so dass eine flexible Werkstückbearbeitung ermöglicht ist.

Der Rahmen der Werkzeugmaschine lässt sich besonders steif ausbilden, wenn dieser als etwa kubisches Raumgitter ausgeführt wird, wobei Rahmenelemente die Kantenbereiche des kubischen Rahmengitters ausbilden.

Die Kühlmittelführung ist vereinfacht, wenn das Kühlmittel die Rahmenelemente durchströmt.

Dabei wird es bevorzugt, wenn die Rahmenelemente als Hohlprofile mit darin verlaufenden Kühlkanälen ausgeführt sind.

Der Aufbau des Kühlmittelkreislaufes ist weiter vereinfacht, wenn der Spindelkühlkreislauf an die Rahmenelemente angeschlossen ist.

Bei einem bevorzugten Ausführungsbeispiel der Erfindung ist der Werkstückträger mit einer in Z-Richtung verfahrbaren Pinole ausgeführt, die ihrerseits an einem X-Y-Schlittensystem geführt ist. Diese Pinole kann mit einer C-Achse ausgeführ sein, so dass der Werkstückträger um eine zur Z-Achse parallele Achse verschwenkbar ist.

Die Pinole wird vorzugsweise vierfach in einem X-Schlitten geführt.

Die Steifigkeit und die Präzision der Bearbeitung lassen sich weiter verbessern, wenn die Antriebe zur Verstellung in X- und Y-Richtung als Doppelantriebe ausgeführt sind.

Bei einem Ausführungsbeispiel der Erfindung kann zumindest ein Werkzeugspindelkopf schwenkbar gelagert sein, so dass beispielsweise die Bearbeitung von ovalen Bohrungen ermöglicht ist.

Zur gleichzeitigen Bearbeitung mehrerer Werkstücke kann zumindest ein Werkzeugspindelkopf als Mehrspindelkopf ausgeführt sein.

Erfindungsgemäß wird es bevorzugt, wenn die Werkzeugspindelköpfe auswechselbar an den Fächern befestigt sind. Die Justierung der Werkzeugspindelköpfe ist besonders präzise, wenn diese über zwei Keilabstimmplatten mit jeweiliger Doppelkeilanordnung innerhalb des jeweiligen Rasters verstellbar sind.

Bei der Parallelbearbe.itung mehrerer Werkstücke kann an einer Spannauflage der Pinole eine Vielzahl von Werkstücken gespannt sein, die mit Bezug zu den Spindeln des Mehrspindelkopfes ausgerichtet sind.

Das Wechseln der Werkzeugspindelköpfe ist besonders einfach, wenn die Werkzeugmaschine mit einer Ausbauhilfe ausgeführt ist, bei der eine am Spindelkopf befestigbare Wechselgabel entlang einer rahmenfesten Führung aus dem Rahmen heraus bzw. in diesen hinein geführt werden kann.

Ein automatisches Be- und Entladen der Werkzeugmaschine wird durch eine erfindungsgemäße Werkstückzuführeinrichtung ermöglicht, die eine Vielzahl von Aufnahmen für dem Werkstückträger zuzuführende Werkstücke und eine Vielzahl Aufnahmen für vom Werkstückträger abzunehmende Werkstücke hat, wobei die jeweiligen Aufnahmen durch Verschwenken der Werkstückzuführeinrichtung in die jeweilige Übergabeposition bringbar sind.

Diese Werkstückzuführeinrichtung ist besonders einfach aufgebaut, wenn die Aufnahmen an gegeneinander versetzten Seitenflächen eines Tragkörpers angeordnet sind, der um eine zur X-Achse parallele A-Achse verschwenkbar ist.

Dieser Tragkörper ist vorzugsweise entlang einer Führung durch eines der Funktionsfächer hindurch in den Arbeitsraum oder aus dem Arbeitsraum verfahrbar.

Sonstige vorteilhafte Weiterbildungen der Erfindung sind Gegenstand weiterer Unteransprüche.

Im Folgenden wird ein bevorzugtes Ausführungsbeispiel der Erfindung anhand schematischer Zeichnungen näher erläutert. Es zeigen:
Figur 1 eine dreidimensionale Darstellung einer erfindungsgemäßen Werkzeugmaschine mit einem als Raumgitter ausgeführten Rahmen;
Figur 2 eine Prinzipdarstellung des Rahmens aus Figur 1;
Figur 3 an dem Rahmen gemäß Figur 1 und 2 befestigte Mehrspindelköpfe zur Bearbeitung in Z-Richtung und einen in X-, Y- und Z-Richtung verstellbaren Werkstückträger in Pinolenbauweise;
Figur 4 eine Ansicht auf ein Schlittensystem zur Verstellung der Pinole gemäß Figur 3;
Figur 5 eine Schnittdarstellung durch einen die Pinole aufnehmenden X-Schlitten;
Figur 6 eine Einzeldarstellung der Pinole aus Figur 5;
Figur 7 eine Justageeinrichtung zum Justieren eines Mehrspindelkopfes;
Figur 8 eine Detaildarstellung der Justageeinrichtung aus Figur 7;
Figur 9 eine Ausbauhilfe zum Wechseln eines Werkzeugspindelkopfes;
Figur 10 eine Detaildarstellung der Ausbauhilfe aus Figur 9;
Figur 11 eine Teildarstellung der Pinole aus Figur 5 mit angesetzter Spannauflage zur Aufnahme einer Vielzahl von Werkstücken und
Figur 12 eine erfindungsgemäße Werkzeugmaschine mit Werkstückzuführeinrichtung.

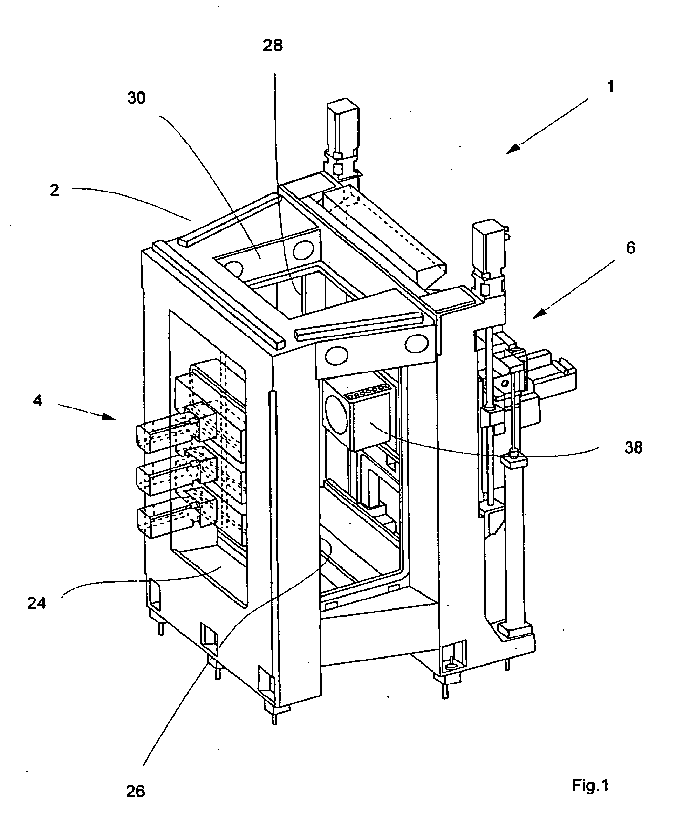

Figur 1 zeigt eine dreidimensionale Darstellung einer nach dem Invers-Konzept ausgeführten Werkzeugmaschine 1, die beispielsweise zur Pleuelbearbeitung (kleines, großes Auge bohren, Seitenflächen fräsen, Schraubenlochbearbeitung, etc.) verwendet werden kann. Die Werkzeugmaschine 1 hat ein Maschinengestell 2, in dem eine Vielzahl von Werkzeugspindelnköpfen 4 und ein Werkstückträger 6 gelagert sind. Bei nach dem Invers-Konzept ausgeführten Werkzeugmaschinen ist der Werkstückträger 6 entlang einer X-Y-Führung und in Z-Richtung verfahrbar, um das oder die Werkstücke mit Bezug zu einem für den jeweiligen Fertigungsvorgang vor gesehenen Werkzeugspindelkopf auszurichten. Auf dem Werkstückträger 6 kann eine Vielzahl von Werkstücken gleichzeitig gespannt sein, so dass mittels eines Mehrspindelkopfes eine simultane Bearbeitung der Werkstücke ermöglicht ist.

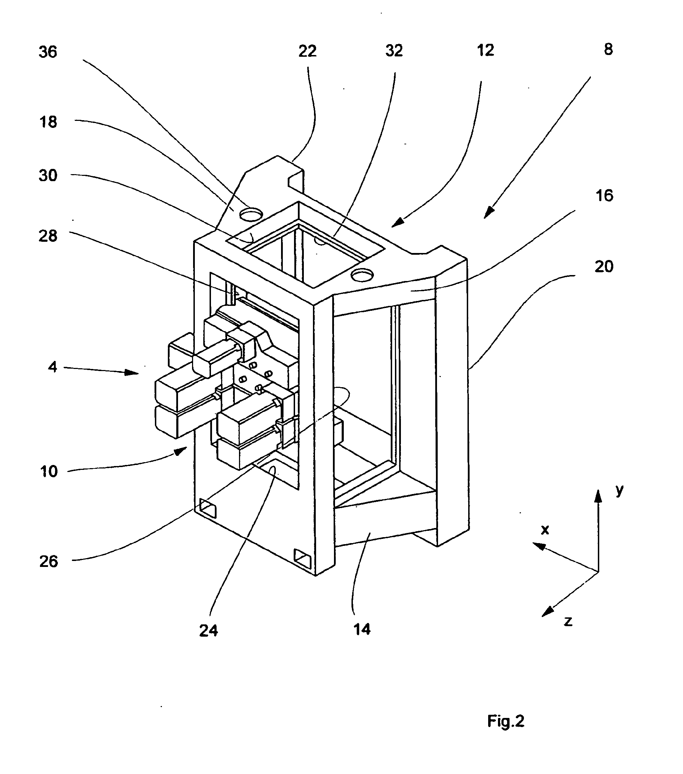

Das in Ständerbauweise ausgeführte Maschinengestell 2 der Werkzeugmaschine 1 ist im Wesentlichen durch einen in einer Art dreidimensionalen Fachwerkkonstruktion ausgeführten Rahmen 8 ausgebildet, der etwa eine tetragonale oder rhombische Struktur ausbildet. Der Aufbau dieses äußerst steifen Rahmens 8 erschließt sich besonders gut aus Figur 2. Demgemäß besteht der Rahmen 8 im Wesentlichen aus einem Frontteil 10 und einem Rückteil 12, die durch vier Seitenstreben miteinander verbunden sind, von denen lediglich die Seitenstreben 14, 16, 18 in den Darstellungen gemäß Figuren 1 und 2 sichtbar sind. Die Breite des Rückteils 12 ist etwas größer als diejenige des Frontteils 10 gewählt, entsprechend verbreitern sich die Seitenstreben 14, 16, 18 konisch vom Frontteil 10 weg zum rückwärtigen Rückteil 12. In Richtung vom Frontteil 10 weg sind am Rückteil 12 sich in Vertikalrichtung (Y-Richtung) erstreckende Stützkonsolen 20, 22 ausgebildet, an denen - wie im Folgenden noch näher erläutert wird - Antriebe und Führungen für den Werkstückträger 6 angeordnet sein können.

Durch die ein Raumgitter ausbildende Ständerkonstruktion werden vier Werkzeugspindelaufnahme- oder Funktionsfächer 24, 26, 28, 30 und ein rückwärtiges Aufnahmefach 32 für den Werkstückträger 6 ausgebildet. Dabei liegen das frontseitige Werkzeugaufnahmefach 24 und das rückwärtige Aufnahmefach 32 sowie die beiden seitlichen Werkzeugaufnahmefächer 26 und 28 einander gegenüber. Das vergleichsweise kleine Werkzeugaufnahmefach 30 ist oberhalb des vom Frontteil 10, vom Rückteil 12 und von den Seitenstreben begrenzten Arbeitsraumes 34 angeordnet.

Wie in Figur 2 angedeutet, können in den Werkzeugaufnahmefächern 24, 26, 28, 30 je nach Fertigungsaufgabe eine oder mehrere Werkzeugspindelköpfe 4 oder sonstige Werkzeugträger angeordnet werden, deren Achsen dann in X-, Y- oder Z-Richtung (siehe Figur 2) angeordnet sind. D.h. die an den seitlichen Werkzeugaufnahmefächern 26, 28 gelagerten Werkzeugspindelköpfe sind in X-Richtung, die am vorderen Werkzeugaufnahmefach 24 angeordneten Werkzeugspindelköpfe 4 in Z-Richtung und die am oberen Werkzeugaufnahmefach 30 angeordneten Werkzeugspindelköpfe 4 in Y-Richtung ausgerichtet. Je nach Bearbeitungsaufgabe können die Werkzeugspindelköpfe beliebig in X-, Y- oder Z-Richtung angeordnet werden, so dass eine sehr flexible Bearbeitung ermöglicht ist.

Der Rahmen 8 des Ständers kann als Guss- oder Schweißkonstruktion ausgeführt sein, wobei im Inneren Kühlmittelkanäle vorgesehen werden, die eine direkte Kühlung des Rahmens 8 ermöglichen. Des Weiteren werden am Rahmen 8 nicht dargestellte Anschlüsse vorgesehen, über die eine Kühlmittelverbindung zu den Werkzeugspindelköpfen 4 und ggfs. auch zum Werkstückträger ermöglicht wird, so dass ein gemeinsamer Kühlmittelkreislauf für das Maschinengestell, den Werkstückträger 6 und die Werkzeugspindelköpfe 4 vorgesehen sein kann.

An dem Rahmen 8 sind des Weiteren Anschlüsse 36 zur Absaugung von Dämpfen aus dem Arbeitsraum 34 vorgesehen. Aufgrund der Raumstruktur des Rahmens 8 des Ständers der Werkzeugmaschine 1 ist der Arbeitsraum 34 von vier Seiten her zugänglich. Des Weiteren erlaubt der erfindungsgemäße Aufbau einen freien Spänefall nach unten und eine einfache Späneabfuhr über einen Späneförderer, der sich durch eines der Aufnahmefächer 24, 26, 28 hindurch erstreckt. Auch der Werkstückwechsel ist praktisch in beliebiger Weise durch die genannten Aufnahmefächer 24, 26, 28, 30 hindurch möglich.

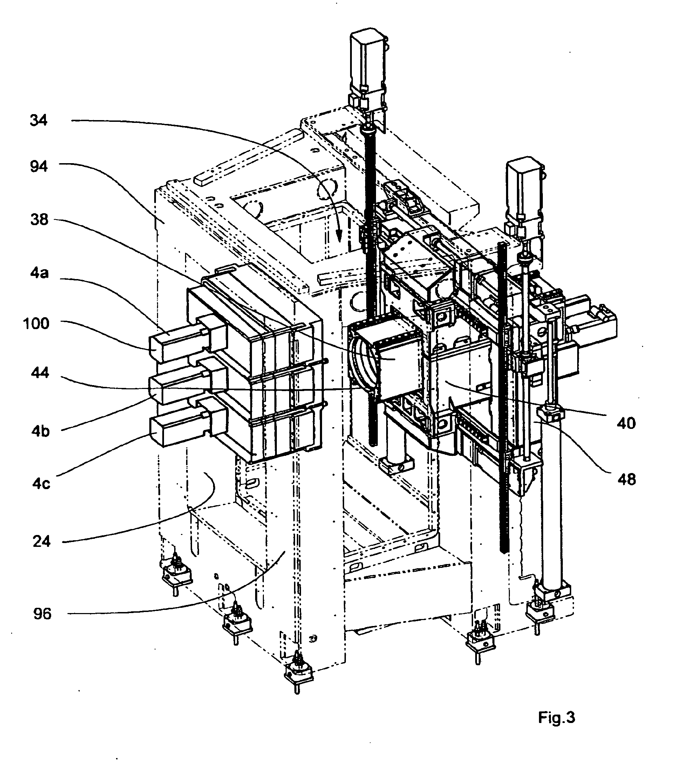

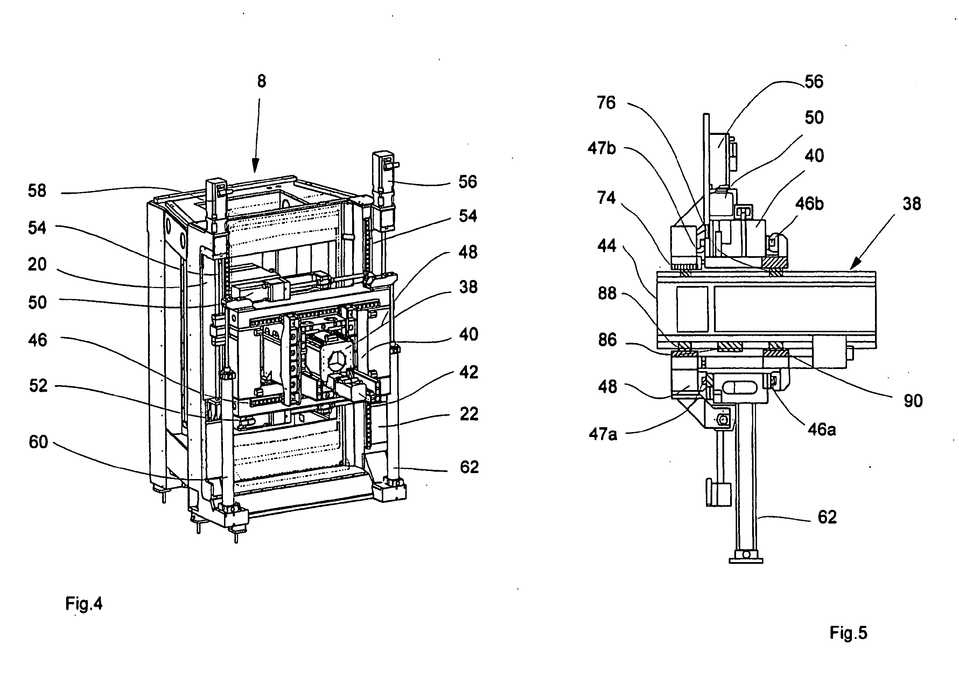

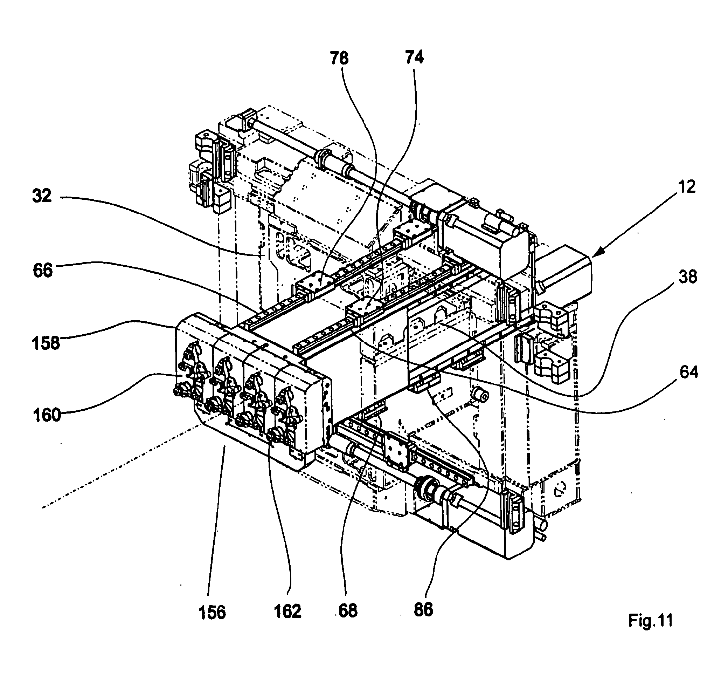

Gemäß der Darstellung in Figur 3 ist der Werkstückträger 6 in dem Aufnahmefach 32 des Rückteils 12 geführt. Figur 4 zeigt eine Ansicht von hinten auf dieses Rückteil 12. Demgemäß hat der Werkstückträger 6 eine Pinole 38, die in Z-Richtung verstellbar in einem X-Schlitten geführt ist. Die Verstellung der Pinole 38 in Z-Richtung erfolgt mittels eines Antriebs 42, der als Kugelgewindetrieb oder als Linearantrieb ausgeführt sein kann. An der in den Arbeitsraum 34 hinein ragenden Frontseite 44 der Pinole 38 kann ein später anhand Figur 11 beschriebener Werkstückträger 156 gelagert sein, auf dem eines oder mehrere Werkstücke gespannt sind. Prinzipiell kann dieser Werkstückträger 156 auch um eine C-Achse (parallel zur Z-Achse) verschwenkbar in der Pinole 38 gelagert sein. Einzelheiten der Pinolen-Konstruktion werden weiter unten erläutert.

Der X-Schlitten 40 ist seinerseits über eine 4-fache X-Führung 46, 47 (siehe auch Fig. 5) an einem Y-Schlitten 48 geführt, entlang der er über einen Doppelantrieb mit zwei parallel und synchron wirkenden X-Antrieben 50, 52 verstellbar ist, die ebenfalls als Kugelgewindetrieb ausgeführt sein können und deren Antriebsmotoren auf der oben liegenden bzw. unten liegenden Seitenfläche des Y-Schlittens 48 befestigt sind.

Die Verstellung des Y-Schlittens 48 in Vertikalrichtung erfolgt entlang zweier Y-Führungen 54, die an der Stützkonsole 20 bzw. 22 befestigt sind. Auch für den Y-Schlitten 48 wird ein Doppelantrieb mit zwei im Bereich jeder Führung 54 angeordneten Y-Antrieben 56, 58 verwendet, die ebenfalls als Kugelgewindetriebe ausgeführt sind. Der Y-Schlitten 48 ist des Weiteren über zwei Stützzylinder 60, 62 abgestützt, deren Kolbenstangen am Y-Schlitten angreifen und deren Zylinder an den Stützkonsolen 20, 22 abgestützt sind. Die beiden Y-Antriebe 56, 58 sind ebenfalls an den Stützkonsolen 20, 22 befestigt.

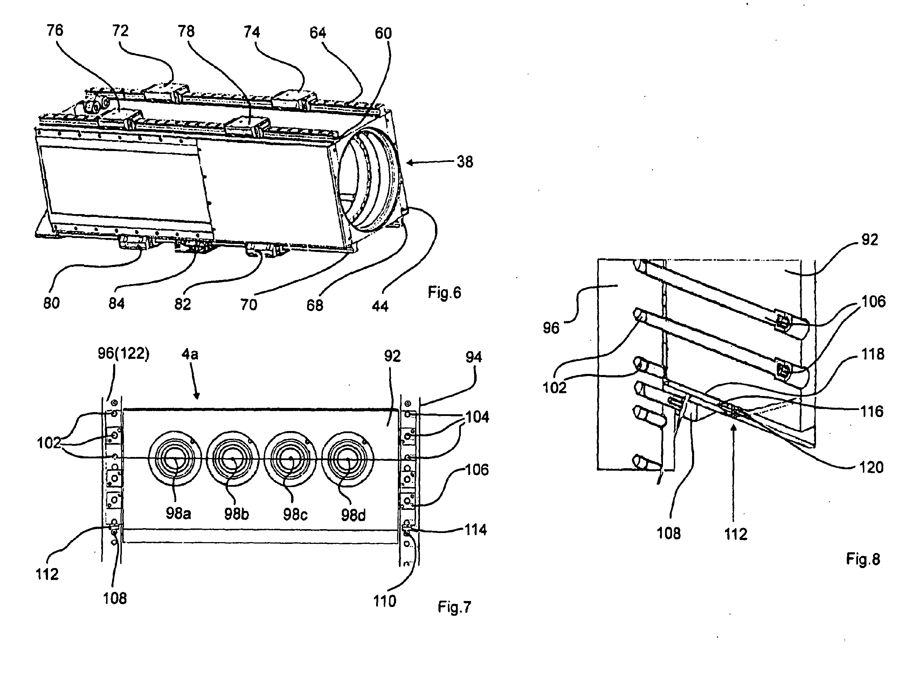

In Figur 5 ist ein Schnitt durch die Pinole 38 in einer Seitenansicht von rechts in der Darstellung gemäß Figur 3 gezeigt. Figur 6 zeigt den Grundaufbau der Pinole 38 an sich. Demgemäß hat die Pinole 38 ein etwa quaderförmiges, hohlgebohrtes Gehäuse, an dessen oberer und unterer Fläche gemäß Figur 6 vier Führungsschienen 64, 66, 68, 70 angeordnet sind, die mit jeweils zwei am X-Schlitten festgelegten Stützführungen 72, 74; 76, 78; 80, 82 sowie zwei weiteren, in Figur 5 sichtbaren Dtützführungen 88, 90, die der Führungsschiene 68 zugeordnet sind Stützführungen zusammenwirken, so dass eine äußerst steife Führung der Pinole 38 in Z-Richtung gewährleistet ist.

Sollte die Werkzeugmaschine 1 zur Schwerzerspanung eingesetzt werden, so können an der Pinole noch zwei oder mehrere, hydraulisch betätigbare Klemmwagen 84, 86 (siehe Fig. 5) zugeordnet sein, über die die Pinole 68 mit Bezug zum X-Schlitten 40 festgelegt werden kann, so dass der Z-Antrieb 42 entlastet ist und hohe Zerspanungsleistungen ermöglicht werden. In der Darstellung gemäß Figur 5 ist auch die 4-fach-Führung des X-Schlittens 40 über die X-Führungen 46a, 46b; 47a, 47b zu sehen, die jeweils am Y-Schlitten 48 befestigt sind und über die der X-Schlitten entlang seiner zum Arbeitsraum weisenden Großfläche und seiner dazu gegenüber liegenden rückseitigen Großfläche geführt ist.

Wie bereits eingangs erwähnt, können in den Werkzeugaufnahmefächern 24, 26, 28, 30 je nach Fertigungsaufgabe eine Vielzahl von Werkzeugspindelköpfen 4 angeordnet werden, wobei die Spindelachsen dann entsprechend in Z-Richtung, Y-Richtung oder X-Richtung ausgerichtet sind. Durch den geschlossenen Kraftfluss bei der Abstützung der Werkzeugspindelköpfe 4 und der Pinole 38 ergibt sich eine äußerst kompakte, steife Maschinenkinematik, die den eingangs beschriebenen Konstruktionen weit überlegen ist.

Bei dem in Figur 3 dargestellten Ausführungsbeispiel sind in dem Werkzeugaufnahmefach 24 drei Mehrspindelköpfe 4a, 4b, 4c übereinander liegend angeordnet, über die in aufeinander folgenden Arbeitsgängen beispielsweise ein Vorbohren, Aufbohren und Reiben einer Bohrung, beispielsweise eines Pleuelauges möglich ist. Entsprechende Mehrspindelköpfe können selbstverständlich auch in den anderen Werkzeugaufnahmefächern 26, 28, 30 angeordnet werden.

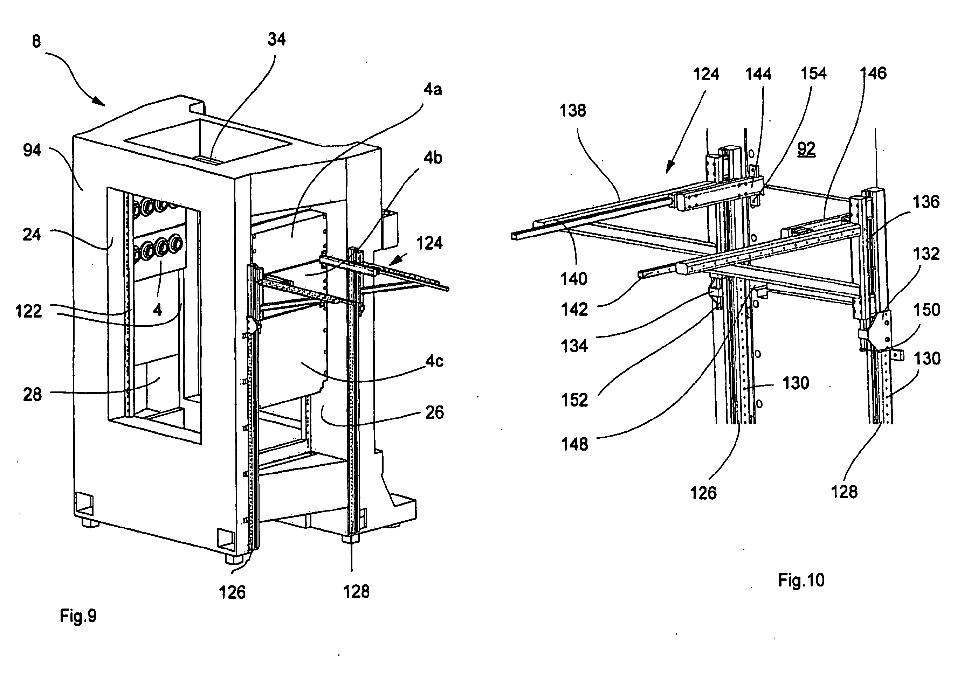

Figur 7 zeigt eine Ansicht vom Arbeitsraum 34 her auf einen Mehrspindelkopf 4a, dessen Spindelgehäuse 92 auswechselbar am Maschinengestell oder genauer gesagt, auf Vertikalrahmenstreben 94, 96 (siehe auch Figur 3) aufgesetzten Klemmleisten 122 (siehe Fig. 9) festgelegt sind. Bei dem dargestellten Ausführungsbeispiel sind im Spindelgehäuse 92 vier Spindeln 98a, 98b, 98c, 98d gelagert, die von einem gemeinsamen Antrieb 100 (Figur 3) angetrieben werden, so dass beispielsweise vier Pleuel oder sonstige Werkstücke gleichzeitig bearbeitet werden können.

Zur Befestigung des Spindelgehäuses 92 der Mehrfach- oder Einfachspindeln ist an den Vertikalrahmenstreben 94, 96 oder an einem sonstigen geeigneten Bereich des Maschinengestells jeweils eine Lochreihe 102, 104 angeordnet, durch die ein Befestigungsraster zur Festlegung des Spindelgehäuses 92 geschaffen wird. An den Löchern der Lochreihen 102, 104 lassen sich Klemmelemente 106 beispielsweise Klemmschrauben zur Befestigung der Mehrspindelköpfe ansetzen. Für die Genauigkeit der Bearbeitung ist es erforderlich, dass die Spindeln 98 in Horizontalrichtung exakt mit Bezug zu den von der Pinole 38 getragenen Werkstücken ausgerichtet sind. Zur Justierung sind am Maschinengestell, im vorliegenden Fall an den Vertikalrahmenstreben 94, 96 oder den Klemmleisten 122, in vorbestimmten Rasterabständen beispielsweise als Zylinderstifte ausgeführte Anschläge 108, 110 vorgesehen, auf die das Spindelgehäuse 92 aufgesetzt werden kann. Zur Justierung des Spindelgehäuses 92 ist dieses mit zwei Keilabstimmplatten : 112, 114 ausgeführt, deren Aufbau in Figur 8 gezeigt ist. Diese zeigt eine schematisierte Schnittansicht von links auf die Anordnung gemäß Figur 7. Man erkennt die Bereiche des Spindelgehäuses 92, das über in die Bohrungen der Lochreihe 102 eingreifende Klemmelemente 106 an den Vertikalrahmenstreben 94, 96 festgelegt und auf dem Anschlag 108 abgestützt ist. Zwischen diesem und dem Spindelgehäuse 92 ist die Keilabstimmplatte 112 eingesetzt, die im Prinzip aus zwei gegenläufig zueinander angeordneten, entlang ihrer Keilflächen aneinander anliegenden Keilen 116, 118 besteht, die über einen Feingewindestift 120 relativ zueinander verschiebbar sind, so dass die Spindeln 98a, 98b, 98c, 98d exakt in Horizontalrichtung justiert werden können. Diese Justage erfolgt vorzugsweise außerhalb der Maschine, so dass das Spindelgehäuse 92 lediglich auf die beiden Anschläge 108, 110 aufgesetzt und am Rahmen befestigt werden muss.

Zum Wechseln der Mehrfachspindelköpfe kann an das Maschinengestell eine Ausbauhilfe 122 gemäß den Figuren 9 und 10 angesetzt werden. Bei diesen beiden Figuren sind in die beiden seitlichen Werkzeugaufnahmefächer 26, 28 jeweils übereinander liegende Mehrfachspindelköpfe 4a, 4b, 4c eingesetzt, deren Spindeln somit in X-Richtung ausgerichtet sind. Eine derartige Bestückung kann beispielsweise bei der Bearbeitung von Zylinderköpfen oder dergleichen vorteilhaft sein. In der Darstellung gemäß Figur 9 sind die an den Arbeitsraum 34 angrenzenden, an der Vertikalrahmenstrebe 94 befestigte Klemmleisten 122 erkennbar, an der jeweils eine der Lochreihen 104 ausgebildet ist. Entsprechende Klemmleisten 122 erstrecken sich in Vertikal- oder in Horizontalrichtung an den Seitenwandungen der Aufnahmefächer 24, 26, 28, 30, so dass die Spindelköpfe oder sonstige Werkzeugträger in der vorbeschriebenen Weise festgelegt werden können.

Die in den Figuren 9 und 10 dargestellte Ausbauhilfe 124 hat zwei Stützschienen 126, 128, die seitlich des jeweiligen Werkzeugaufnahmefaches, im vorliegenden Fall seitlich des Werkzeugaufnahmefaches 26 an Bohrungen des Rahmens 8 oder genauer gesagt, der Vertikalrahmenstreben festgelegt werden können. An den Seitenflächen der Stützschienen 126, 128 sind jeweils Rasterbohrungen 130 (siehe Figur 10) angeordnet, in die Stützkonsolen 132 bzw. 134 einsetzbar sind. Auf diesen ist jeweils eine vom Rahmen weg auskragende Stütze 136, 138 abgestützt, die entlang der Stützschienen 126, 128 verschiebbar ist. Jede der Stützen 136, 138 trägt eine Horizontalführung 140 bzw. 142, auf denen eine Wechselgabel 144, 146 in Horizontalrichtung geführt ist. Diese Wechselgabeln 144, 146 greifen jeweils an dem Spindelgehäuse 92 des auszuwechselnden Mehrfachspindelkopfes 4a an. Hierzu sind die Spindelgehäuse 92 jeweils mit Freistellungen 148 ausgebildet, in die jeweils eine Wechselgabel 144 bzw. 146 ähnlich wie die Gabeln eines Gabelstaplers eintauchen kann. Die Eintauchtiefe der Wechselgabeln 144, 146 ist jeweils durch eine Anschlagplatte 154 begrenzt. Die vorgenannten Stützen 136, 138 sind auf den Stützkonsolen 132, 134 mittels Abdrückschrauben 150, 152 abgestützt, so dass durch deren Verstellung das auszuwechselnde Spindelgehäuse 92 nach oben angehoben und dann entlang der Horizontalführungen 140, 142 aus dem jeweiligen Werkzeugaufnahmefach heraus gefahren werden kann. Durch diese Ausbauhilfe 124 lässt sich somit das Wechseln der Spindelköpfe oder sonstigen Werkzeugträgern wesentlich vereinfachen, so dass die Rüstzeiten minimiert sind. Eine derartige Ausbauhilfe 124 lässt sich in der vorbeschriebenen Weise an jedes der Werkzeugaufnahmefächer 24, 26, 28, 30 ansetzen.

Wie bereits in der Beschreibungseinleitung erwähnt, können die Spindelköpfe 4 auch schwenkbar in den Werkzeugaufnahmefächern 24, 26, 28, 30 gelagert sein, so dass beispielsweise die Bearbeitung von ovalen Ausnehmungen, Bohrungen ermöglicht ist.

Um den korrekten Einbau der Mehrfachspindelköpfe 4 zu überprüfen, können in den Mehrspindelkopf zwei zueinander beabstandete Referenzdorne eingesetzt und dann auf der an der Pinole 38 befestigten Spannvorrichtung für die Werkstücke ein Messtaster befestigt werden. Über diesen Messtaster lässt sich dann die Parallelität der Spindeln überprüfen und ggf. softwaremäßig eine automatische Korrektur der X-, Y- und Z-Position der Spindelköpfe in der Maschinensteuerung abgelegen. Bei einer Schiefstellung der Y-Achse wird dann über die Maschinensteuerung ein Korrekturmaß ausgeworfen, welches dann manuell am Mehrspindelkopf verstellt werden kann.

An dem Spindelgehäuse 92 können des Weiteren um Transport des Mehrspindelkopfes austarierte Bohrungen für Augenschrauben vorgesehen sein, an denen dann ein Transportgerät angreift, um den Mehrspindelkopf auszuwechseln. Prinzipiell könnte auch der Z-Vorschub auf die Werkzeugseite verlegt werden so dass Werkstückseitig nur eine X-Y-Führung erforderlich wäre. Diese Lösung wäre aber aufgrund der auskragenden Spindeln nicht so steif.

Figur 11 zeigt eine Teilansicht des Rückteils 12 des in Figur 2 dargestellten Rahmens 8, durch das das Aufnahmefach 32 für die anhand Figur 6 im Detail beschriebene Pinole 38 ausgebildet ist. Diese ist entlang den Führungsschienen 64, 66, sowie 68, 70 (letztere nicht sichtbar in Figur 11) in Z-Richtung und über die in Figur 4 dargestellten X-Y-Schlitten 40, 48 in X- und Y-Richtung verfahrbar. Bei der in Figur 11 dargestellten Variante ist an der Stirnseite der Pinole ein Werkstückträger 156 mit einer Spannauflage 158 für beispielsweise vier Werkstücke, im vorliegenden Fall vier Pleuel 160 ausgeführt. Gemäß Figur 11 sind diese Pleuel 160 mit dem großen Pleuelauge nach oben weisend nebeneinander liegend angeordnet. Die Spannauflage 158 ist dabei mit einer Vielzahl von Spannelementen 162 ausgeführt, um die Pleuel 160 in einer vorbestimmten Relativposition zu spannen. Wie bereits vorstehend erwähnt, kann die Pinole 38 so ausgeführt sein, dass der Werkstückträger 156 mit der Spannauflage 158 um eine C-Achse herum verschwenkbar ist. Dies ist jedoch nur eine Option und nicht notwendiger Weise erforderlich. Die in den anderen Fächern 24, 26, 28, 30 angeordneten Spindelköpfe oder sonstige Werkzeugträger sind in einer entsprechenden Anordnung relativpositioniert, so dass durch Verfahren der Pinole 38 in X-Y- und/oder Z-Richtung die Pleuel 160 exakt mit Bezug zu dem Werkzeugen ausgerichtet werden können. Da mehrere Werkzeuge zur aufeinander folgenden Bearbeitung, beispielsweise des großen und des kleinen Pleuelauges und zum Fräsen von Pleuelflächen in den Fächern 24, 26, 28, 30 angeordnet werden können, ist es möglich, alle Bearbeitungsschritte aufeinander folgend ohne Umspannen der Pleuel 160 oder der sonstigen Werkstücke durchzuführen, so dass eine Fertigung mit hoher Präzision und ohne aufwendige Kalibrierung der Werkstückspannposition ermöglicht ist.

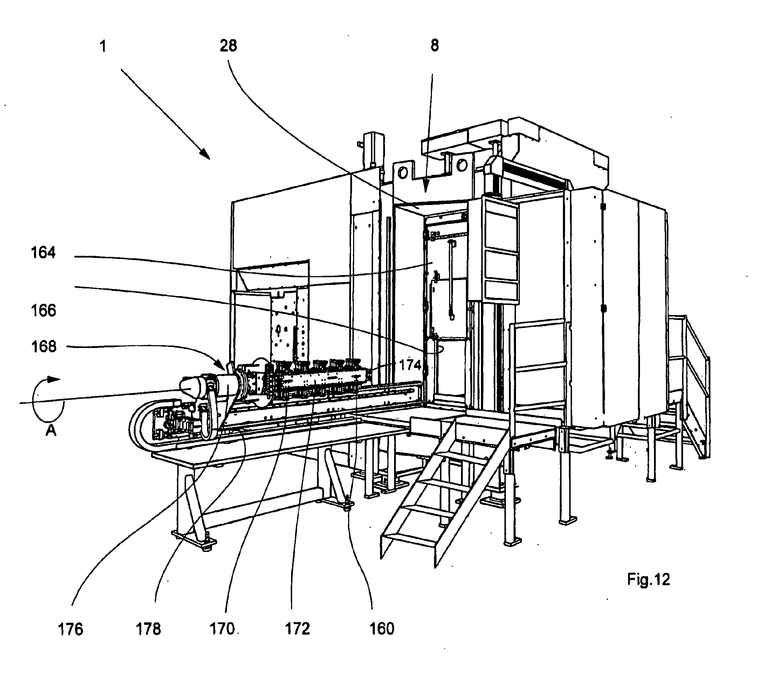

Bei einer Großserienfertigung ist es vorteilhaft, die zu bearbeitenden Werkstücke automatisch zu- und abzuführen. Figur 12 zeigt eine derartige automatisch zu be- und entladende Werkzeugmaschine 1, die gemäß dem vorbeschriebenen Konzept aufgebaut ist, wobei in der Darstellung gemäß Figur 12 der Rahmen 8 verkleidet ist und auch die entsprechenden Anbauten zur Aufnahme der Maschinensteuerung, der Energie- und Kühl-Schmiermittelversorgung, zur Messung etc. zu sehen sind. Bei dem dargestellten Ausführungsbeispiel der Werkzeugmaschine 1 ist das seitliche Fach 28 als Funktionsfach zum Zu- und Abführen der Pleuel 160 ausgeführt. Dabei ist das Fach 28 mit einer Zugangstür 164 versehen, die mit einer Zuführöffnung 166 ausgeführt ist, durch die hindurch eine Werkstückzuführeinrichtung 168 in den Arbeitsraum einfahren oder aus diesem heraus fahren kann. Diese Werkstückzuführeinrichtung 168 wird von der Anmelderin auch "Shuttle" genannt. Dieses Shuttle 168 hat einen etwa quaderförmigen Tragkörper 170 mit einem etwa rechteckförmigen Querschnitt, an dessen in der Darstellung gemäß Figur 12 etwa in Vertikalrichtung verlaufenden Seitenflächen 172 Aufnahmen 174 für die Pleuel 160 bzw. die zu bearbeitenden Werkstücke angeordnet sind. In der Darstellung gemäß Figur 12 ist nur die vordere, zum Betrachter weisende Seitenfläche 172 zu sehen, die entsprechend mit vier Aufnahmen 174 für jeweils ein Pleuel 160 ausgeführt sind. Diese werden beispielsweise über ein Handlingsgerät in die Aufnahmen 174 eingelegt und dann gespannt. An der rückseitigen, vom Betrachter abgewandten Seitenfläche des Tragkörpers 170 sind entsprechende Aufnahmen 174 vorgesehen, die in der dargestellten Beladeposition des Werkstückträgers 156 leer, d.h. nicht mit Pleueln 160 belegt sind.

Der Tragkörper 170 kann über einen Schwenkantrieb 176 um seine A-Achse (parallel zur X-Achse) verschwenkt werden, um die Aufnahmen 174 an der Seitenfläche 172 oder an der rückwärtigen Seitenfläche in eine Übergabeposition zu bringen.

Der Werkstückträger 156 mit dem Tragkörper 170 und dem Schwenkantrieb 176 ist entlang einer X-Führung 178 verfahrbar, so dass der Tragkörper 170 mit den Aufnahmen 174 durch die Zuführöffnung 166 hindurch in den Arbeitsraum verfahren werden kann.

Es sei angenommen, dass bereits vier Pleuel auf der Spannauflage 158 gespannt und fertig bearbeitet sind. Zum Entladen dieser fertig bearbeiteten Pleuel 160 wird dann entsprechend der Werkstückträger 156 entlang der Führung 178 durch die Zuführöffnung 166 in den Arbeitsraum in eine vorbestimmte Relativposition verfahren. Anschließend wird die Pinole entsprechend angesteuert, so dass die bearbeiteten Pleuel 160 mit Bezug zu den leeren Aufnahmen 174 des Tragkörpers 170 ausgerichtet sind. Durch Absenken der Pinole 138 in Y-Richtung werden dann diese bearbeiteten Pleuel 160 an die leeren Aufnahmen 174 übergeben und gespannt. In einem darauf folgenden Arbeitsschritt wird die Pinole 38 wieder in eine Zwischenposition verfahren und der Schwenkantrieb 176 betätigt, um die unbearbeiteten Pleuel 160 in die Übergabeposition zu verschwenken. Dabei sind in der Darstellung gemäß Figur 12 die Pleuel 160 zunächst mit dem kleinen Pleuelauge nach oben weisend in den Aufnahmen 174 angeordnet, so dass nach dem Verschwenken die großen Pleuelaugen nach oben ausgerichtet sind. Anschließend werden die unbearbeiteten Pleuel 160 durch entsprechendes Verfahren der Pinole 38 aus den Aufnahmen 174 ausgehoben und an der Spannauflage 158 präzise gespannt, wobei die Relativposition über eine nicht dargestellte Messeinrichtung überprüft und ggf. korrigiert werden kann. Nach der Übergabe der Pleuel 160 an die Pinole 38 fährt das Shuttle 168 aus dem Arbeitsraum heraus, so dass die bearbeiteten Pleuel 160 über ein weiteres Handlingsgerät entnommen und neue Pleuel in die in Figur 12 sichtbaren Aufnahmen 174 eingelegt werden.

Prinzipiell können die Aufnahmen 174 auch an den zueinander benachbarten Seitenflächen des Tragkörpers 170, bspw. an der Seitenfläche 172 und an der dazu benachbarten oberen Seitenfläche angeordnet sein.

Bei dem vorbeschriebenen Ausführungsbeispiel sind die Werkzeugspindelköpfe 4 in Z-Richtung angeordnet. Wie bereits erwähnt, können auch in den beiden seitlichen Fächern 26, 28 oder im oberen Fach 30 alternativ oder zusätzlich Werkzeugträger/Werkzeugspindelköpfe angeordnet werden, um auch komplexe Zerspanungsaufgaben bewältigen zu können. Die Anwendung der Werkzeugmaschine ist keinesfalls auf die Bearbeitung von Pleuel 160 beschränkt, sondern es können beliebige Werkstücke wie beispielsweise Zylinderköpfe nach verschiedenen Technologien wie beispielsweise durch Fräsen, Bohren, Glätten oder Honen bearbeitet werden. Ein wichtiger Anwendungsfall könnte die Bearbeitung von Pleuelaugen mittels Glättwerkzeugen darstellen, da beispielsweise die Pleuelaugen zunächst über geeignete Spindelköpfe feingebohrt und dann mittels jeweils eines Glättwerkzeuges geglättet werden könnten. Ein derartiges Glättwerkzeug ist in der Patentanmeldung DE 10 2007 017 800 der Anmelderin beschrieben.

Das erfindungsgemäße Maschinenkonzept mit der in den Rahmen integrierten Kühlung und der einfachen Abführbarkeit der Späne durch eines der Funktionsfächer hindurch und mit dem sehr einfach und glattflächig aufgebauten Arbeitsraum ermöglicht auch eine Trockenbearbeitung der Werkstücke.

Offenbart ist eine Werkzeugmaschine in Invers-Bauweise, wobei eine Vielzahl von Werkzeugspindelköpfen in einem Maschinengestell angeordnet ist und ein Werkstückträger entlang einer X-Y-Z-Führung verfahrbar ist. Erfindungsgemäß ist das Maschinengestell als räumliche Gitterkonstruktion mit einer Vielzahl von Werkzeugaufnahmefächern oder Funktionsfächern ausgeführt.

### Bezugszeichenliste:

- 1: Werkzeugmaschine
- 2: Maschinengestell
- 4: Werkzeugspindelkopf
- 6: Werkstückträger
- 8: Rahmen
- 10: Frontteil
- 12: Rückteil
- 14: Seitenstrebe
- 16: Seitenstrebe
- 18: Seitenstrebe
- 20: Stützkonsole
- 22: Stützkonsole
- 24: Werkzeugaufnahmefächer
- 26: Werkzeugaufnahmefächer
- 28: Werkzeugaufnahmefächer
- 30: Werkzeugaufnahmefächer
- 32: Aufnahmefach
- 34: Arbeitsraum
- 36: Anschluss
- 38: Pinole
- 40: X-Schlitten
- 42: Z-Antrieb
- 44: Frontseite
- 46: X-Führung
- 47: X-Führung
- 48: Y-Schlitten
- 50: X-Antrieb
- 52: X-Antrieb
- 54: Y-Führung
- 56: Y-Antrieb
- 58: Y-Antrieb
- 60: Stützzylinder
- 62: Stützzylinder
- 64: Führungsschiene
- 66: Führungsschiene
- 68: Führungsschiene
- 70: Führungsschiene
- 72: Stützführung
- 74: Stützführung
- 76: Stützführung
- 78: Stützführung
- 80: Stützführung
- 82: Stützführung
- 84: Klemmwagen
- 86: Klemmwagen
- 88: Stützführung
- 90: Stützführung
- 92: Spindelgehäuse
- 94: Vertikalrahmenstrebe
- 96: Vertikalrahmenstrebe
- 98: Spindel
- 100: Antrieb
- 102: Lochreihe
- 104: Lochreihe
- 106: Klemmelemente
- 108: Anschlag
- 110: Anschlag
- 112: Keilabstimmplatte
- 114: Keilabstimmplatte
- 116: Keil
- 118: Keil
- 120: Feingewindestift
- 122: Klemmleiste
- 124: Ausbauhilfe
- 126: Stützschiene
- 128: Stützschiene
- 130: Rasterbohrung
- 132: Stützkonsole
- 134: Stützkonsole
- 136: Stütze
- 138: Stütze
- 140: Horizontalführung
- 142: Horizontalführung
- 144: Wechselgabel
- 146: Wechselgabel
- 148: Freistellung
- 150: Abdrückschraube
- 152: Abdrückschraube
- 154: Anschlagplatte
- 156: Werkstückträger
- 158: Spannauflage
- 160: Pleuel
- 162: Spannelement
- 164: Tür
- 166: Zuführöffnung
- 168: Werkstückzuführeinrichtung/Shuttle
- 170: Tragkörper
- 172: Seitenfläche
- 174: Aufnahme
- 176: Schwenkantrieb
- 178: Führung

## Patentansprüche

1. Werkzeugmaschine mit einer Vielzahl von an einem Maschinengestell gelagerten Werkzeugspindelköpfen (4) und einem Werkstückträger (6), der entlang zumindest einer Führung verfahrbar ist, um das Werkstück mit Bezug zu einer der Spindeln (4) auszurichten, **dadurch gekennzeichnet, dass** das Maschinengestell einen im Hinblick auf den Kraftfluss geschlossenen Rahmen (8) mit zumindest zwei etwa senkrecht oder parallel zueinander verlaufenden Werkzeugaufnahme- oder Funktionsfächern (24, 26, 28, 30) aufweist, wobei der Rahmen (8) als Raumgitter ausgebildet ist.

2. Werkzeugmaschine nach Patentanspruch 1, wobei ein Werkzeugaufnahme-oder Funktionsfach (24, 26, 28, 30) dem Werkstückträger (6) in Z-Richtung gegenüber liegt -

3. Werkzeugmaschine nach Patentanspruch 1 oder 2, wobei die Werkzeugaufnahmefächer (24, 26, 28, 30) seitlich, gegenüber liegend und oberhalb der Z-Achse angeordnet sind.

4. Werkzeugmaschine nach einem der vorhergehenden Patentansprüche, wobei Rahmenelemente die Kantenbereiche des Raumgitters ausbilden.

5. Werkzeugmaschine nach einem der vorhergehenden Patentansprüche, wobei der Rahmen (8) gekühlt list.

6. Werkzeugmaschine nach Patentanspruch 4 oder 5, wobei der Rahmen (8) mit integrierten Kühlkanälen ausgeführt ist.

7. Werkzeugmaschine nach Patentanspruch 5 oder 6, wobei ein Spindelkühlkreislauf an die Kühlkanäle des Rahmens (8) angeschlossen ist.

8. Werkzeugmaschine nach einem der vorhergehenden Patentansprüche, wobei der Werkstückträger (6) eine in Z-Richtung verfahrbare Pinole (38) hat, die auf einen X-Y-Schlittensystem gelagert ist.

9. Werkzeugmaschine nach Patentanspruch 8, wobei die Pinole (38) mit einer C-Achse ausgeführt ist.

10. Werkzeugmaschine nach einem der vorhergehenden Patentansprüche, wobei zumindest ein Werkzeugspindelkopf (4) schwenkbar gelagert ist.

11. Werkzeugmaschine nach einem der vorhergehenden Patentansprüche, wobei zumindest ein Werkzeugspindelkopf (4) als Mehrspindelkopf ausgeführt ist.

12. Werkzeugmaschine nach einem der vorhergehenden Patentansprüche, wobei an der Pinole (38) eine Spannauflage zur Aufnahme einer Vielzahl von Werkstücken befestigt ist, die mit Bezug zu den Spindeln (4) eines Mehrspindelkopfes ausgerichtet sind.

13. Werkzeugmaschine nach einem der vorhergehenden Patentansprüche, mit einer Ausbauhilfe (124), an der ein Werkzeugspindelkopf festlegbar und entlang einer Führung (140, 142) aus dem Werkzeugaufnahmefach (24, 26, 28, 30) herausfahrbar ist.

14. Werkzeugmaschine nach einem der vorhergehenden Patentansprüche, mit einer Werkstückzuführeinrichtung (168), die eine Vielzahl von Aufnahmen (174) für dem Werkstückträger (6) zuzuführende Werkstücke (160) und eine Vielzahl von Aufnahmen (174) für vom Werkstückträger (6) abzunehmende bearbeitete Werkstücke (160) hat, wobei die Aufnahmen (174) durch Verschwenken der Werkstückzuführeinrichtung (168) in die jeweilige Übergabeposition bringbar sind.

15. Werkzeugmaschine nach Patentanspruch 14, wobei die Aufnahmen (174) an gegeneinander versetzten Seitenflächen eines Tragkörpers (170) angeordnet sind, der um eine zur X-Achse parallele A-Achse verschwenkbar ist.

16. Werkzeugmaschine nach Patentanspruch 15. wobei der Tragkörper (170) durch ein Funktionsfach (28, 166) hindurch verfahrbar ist.

## Claims

1. A machine tool having a plurality of tool spindle heads (4) mounted on a machine frame and a workpiece support (6) that is movable along at least one guide in order to align the workpiece in relation to one of the spindles (4), **characterised in that** the machine frame comprises a frame (8) that is closed with respect to the force flow and has at least two tool receiving compartments or function compartments (24, 26, 28, 30) running approximately perpendicular or parallel to each other, wherein the frame (8) is in the form of a space grid.

2. A machine tool according to claim 1, wherein a tool receiving or function compartment (24, 26, 28, 30) lies opposite the workpiece support (6) in the Z-direction.

3. A machine tool according to claim 1 or 2, wherein the tool-receiving compartments (24, 26, 28, 30) are arranged laterally of, opposite and above the Z-axis.

4. A machine tool according to one of the preceding claims, wherein frame elements form the edge regions of the space grid.

5. A machine tool according to one of the preceding claims, wherein the frame (8) is cooled.

6. A machine tool according to claim 4 or 5, wherein the frame (8) is constructed with integrated cooling channels.

7. A machine tool according to claim 5 or 6, wherein a spindle cooling circulation is connected to the cooling channels of the frame (8).

8. A machine tool according to one of the preceding claims, wherein the tool support (6) has a spindle sleeve (38) mounted on an X-Y slide system and movable in the Z-direction.

9. A machine tool according to claim 8, wherein the spindle sleeve (38) is designed with a C-axis.

10. A machine tool according to one of the preceding claims, wherein at least one tool spindle head (4) is pivotally mounted.

11. A machine tool according to one of the preceding claims, wherein at least one tool spindle head (4) is in the form of a multi-spindle head.

12. A machine tool according to one of the preceding claims, wherein a clamping support for receiving a plurality of workpieces aligned in relation to the spindles (4) of a multi-spindle head is fastened to the spindle sleeve (38).

13. A machine tool according to one of the preceding claims, having a dismounting aid (124) to which a tool spindle head can be fixed and can be moved along a guide (140, 142) out of the tool-receiving compartment (24, 26, 28, 30).

14. A machine tool according to one of the preceding claims, having a workpiece feed device (168), which has a plurality of holding fixtures (174) for workpieces (160) to be fed to the workpiece support (6) and a plurality of holding fixtures (174) for processed workpieces (160) to be removed from the workpiece support (6), wherein the holding fixtures (174) can be brought into the particular transfer position by pivoting the workpiece feed device (168).

15. A machine tool according to claim 14, wherein the holding fixtures (174) are arranged on lateral faces offset with respect to one another of a support (170), which is pivotable about an A-axis parallel to the X-axis.

16. A machine tool according to claim 15, wherein the support (170) can be moved right through a function compartment (28, 166).

## Revendications

1. Machine-outil présentant une pluralité de nez de broche d'outil (4) logés sur un bâti de machine et un porte-pièces (6) qui peut être déplacé le long d'au moins un guidage afin d'orienter la pièce par rapport à l'une des broches (4), **caractérisée en ce que** le bâti de machine présente un cadre (8) fermé en ce qui concerne le flux de force, avec au moins deux compartiments de réception d'outil ou fonctionnels (24, 26, 28, 30) s'étendant à peu près perpendiculairement ou parallèlement l'un à l'autre, sachant que le cadre (8) est réalisé comme une grille.

2. Machine-outil selon la revendication 1, sachant qu'un compartiment de réception d'outil ou fonctionnel (24, 26, 28, 30) fait face au porte-pièces (6) dans le sens Z.

3. Machine-outil selon la revendication 1 ou 2, sachant que les compartiments de réception d'outil (24, 26, 28, 30) sont disposés latéralement, en face et au-dessus de l'axe Z.

4. Machine-outil selon l'une quelconque des revendications précédentes, sachant que des éléments de cadre réalisent les zones de bord de la grille.

5. Machine-outil selon l'une quelconque des revendications précédentes, sachant que le cadre (8) est refroidi.

6. Machine-outil selon la revendication 4 ou 5, sachant que le cadre (8) est réalisé avec des canaux de refroidissement intégrés.

7. Machine-outil selon la revendication 5 ou 6, sachant qu'un circuit de refroidissement de broche est raccordé aux canaux de refroidissement du cadre (8).

8. Machine-outil selon l'une quelconque des revendications précédentes, sachant que le porte-pièces (6) présente un fourreau (38) pouvant se déplacer dans le sens Z et logé sur un système de chariot X, Y.

9. Machine-outil selon la revendication 8, sachant que le fourreau (38) est réalisé avec un axe C.

10. Machine-outil selon l'une quelconque des revendications précédentes, sachant qu'au moins un nez de broche d'outil (4) est logé de manière pivotante.

11. Machine-outil selon l'une quelconque des revendications précédentes, sachant qu'au moins un nez de broche d'outil (4) est réalisé comme un nez multibroche.

12. Machine-outil selon l'une quelconque des revendications précédentes, sachant qu'un appui de serrage pour la réception d'une pluralité de pièces est fixé sur le fourreau (38), lesquelles sont orientées par rapport aux broches (4) d'un nez multibroche.

13. Machine-outil selon l'une quelconque des revendications précédentes, comportant une aide au démontage (124), sur laquelle un nez de broche d'outil peut être fixé et peut être déplacé le long d'un guidage (140, 142) hors du compartiment de réception d'outil (24, 26, 28, 30).

14. Machine-outil selon l'une quelconque des revendications précédentes, comportant un dispositif d' amenée de pièces (168) qui présente une pluralité de logements (174) pour les pièces (160) devant être amenées au porte-pièces (6) et une pluralité de logements (174) pour des pièces usinées (160) devant être retirées du porte-pièces (6), sachant que les logements (174) peuvent être amenés à la position de transfert respective par le pivotement du dispositif d'amenée de pièces (168).

15. Machine-outil selon la revendication 14, sachant que les logements (174) sont disposés sur des surfaces latérales décalées l'une contre l'autre d'un corps porteur (170) pouvant être pivoté autour d'un axe A parallèle à l'axe X.

16. Machine-outil selon la revendication 15, sachant que le corps porteur (170) peut être déplacé au travers d'un compartiment fonctionnel (28, 166).
